# EUROPÄISCHE PATENTANMELDUNG

(11) **EP 0 752 538 A2**
(43) Veröffentlichungstag der Anmeldung: **08.01.1997**
(21) Anmeldenummer: 96110372.8
(22) Anmeldetag: 27.06.1996
(51) Int. Cl.: F16C 33/10

(54) **Fluidgeschmiertes Gleitlager**

(30) Priorität: 05.07.1995 DE 19524510
(71) Anmelder: KSB Aktiengesellschaft, 67227 Frankenthal (DE)
(72) Erfinder: Gaffal, Karl, 67251 Freinsheim (DE); Prechtl, Wolfgang, 92237 Sulzbach-Rosenberg (DE); Schreyer, Horst, 91217 Hersbruck (DE)

(57) **Zusammenfassung**

Gegenstand der Erfindung ist ein fluidgeschmiertes Gleitlager, insbesondere ein in Kreiselpumpen einzusetzendes, durch die Förderflüssigkeit geschmiertes Gleitlager, wobei als Gleitpartner ein harter und ein weicher Werkstoff dienen.

Als Lagerpaarung wird ein harter Partner aus Metall oder Keramikmaterial und ein weicher Partner aus kohlefaserverstärktem Kohlenstoff (CFC) vorgeschlagen.

Das erfindungsgemäße Gleitlager zeichnet sich aus durch einen niedrigen Reibbeiwert, geringen Verschleiß und eine geringe Wärmeentwicklung.

## Beschreibung

Gegenstand der Erfindung ist ein fluidgeschmiertes Gleitlager, insbesondere ein in Kreiselpumpen einzusetzendes, durch die Förderflüssigkeit geschmiertes Gleitlager, wobei als Gleitpartner ein harter und ein weicher Werkstoff dienen.

Durch das Förderprodukt oder ein von außen zugeführtes fluidgeschmiertes Gleitlager werden in Kreiselpumpen seit langem eingesetzt. Für die miteinander im Eingriff stehenden Teile eines solchen Gleitlagers werden bisher die unterschiedlichsten Werkstoffe benutzt. Unterscheiden lassen sich die Werkstoffe unter anderem nach ihrer Härte. Als Werkstoffe mit hoher Härte werden Hartmetalle (z. B. WC), Metalle mit Oberflächenhärtung (z. B. St 37 nitriert), Beschichtungen auf Metallen (z. B. Cr₂O₃), monolitische Oxid- und Nichtoxidkeramiken (z. B. Al₂O₃, z. B. SiC) und faserverstärkte Nichtoxidkeramiken (z. B. SiC/SiC) verwendet.

Als Lagerwerkstoffe mit geringer Härte dienen Weichmetalle (z. B. Bronze), Kohle (z. B. Elektrokohle, graphitisierte Kohle), Polymere (z. B. Polyethylen hochmolekular, Teflon) und Elastomere (z. B. Naturkautschuk).

Für die Anwendung bei Gleitlagern werden die genannten Werkstoffe gleichartig, also hart/hart bzw. weich/weich, oder aber in der Kombination hart/weich gepaart.

Die Standzeit eines Gleitlagers ist abhängig von den Bedingungen im Schmierspalt zwischen dem feststehenden und dem rotierenden Teil des Gleitlagers. Im Idealzustand, den hydrodynamischen Fall, ist der Verschleiß an den Lagerleisten relativ gering und nur in geringem Maße abhängig von den eingesetzten Werkstoffen. In der Praxis treten aber oft unerwünschte, die Lager belastende Bedingungen auf:

### 1. Mischreibung

Bei der Mischreibung wird der hydrodynamische Schmierfilm teilweise unterbrochen, so daß sich die Gleitpartner mechanisch berühren und werkstoffabhängig unterschiedlich verschleißen.

### 2. Abrasion

Unerwünschte Beimengungen von Feststoffen im Schmiermedium erzeugen abrasive Belastung und bewirken Verschleiß eines oder beider Gleitpartner, wobei die Verschleißrate wiederum stark werkstoffabhängig ist.

### 3. Korrosion

Korrosive Flüssigkeiten führen je nach chemischer Beständigkeit der Werkstoffe zu einem chemischen Angriff an den Lagern, der lebensdauerbegrenzend ist.

### 4. Trockenreibung

Bestimmte Betriebszustände, wie der Betrieb bei nichtgefüllter Pumpe oder bei einer Verdampfung der Flüssigkeit im Lagerbereich, führen zu einem Trockenlauf des Lagers und damit zu einer starken Reibung und Abnutzung der Gleitlager.

Für die genannten Belastungsarten sind die zitierten Werkstoffe in unterschiedlichem Maße geeignet. Keine der bisher verwendeten Werkstoffpaarungen erfüllte aber alle Anforderungen in einer gleich guten Weise. Am besten bewährt haben sich noch die Hart/Hart-Paarungen mit monolithischen SiC-Keramiken. Diese Paarungen zeichnen sich durch eine hohe Beständigkeit gegen Gleitverschleiß, Abrasion und Korrosion aus. Problematisch ist ihr Verhalten aber vor allem bei Trockenreibung. Außerdem sind sie empfindlich gegen Stoßbelastung, Thermoschock und mechanische Zugbeanspruchungen, welche an diesen sprödbruchgefährdeten Werkstoffen zu Schäden und vorzeitigen Ausfällen führen. Der hohe Elastizitätsmodul und der gegenüber Metallen niedrige thermische Ausdehnungskoffizient erfordern einen hohen Aufwand bei der konstruktiven Einbindung dieser Bauteile.

Der Erfindung liegt die Aufgabe zugrunde, eine Gleitlagerpaarung zu schaffen, die sich durch eine hohe Beständigkeit gegen die genannten Belastungsarten auszeichnet.

Die gestellte Aufgabe wird erfindungsgemäß dadurch gelöst, daß der harte Partner aus Metall oder aus Keramikmaterial und der weiche Partner aus kohlefaserverstärktem Kohlenstoff (CFC) besteht.

In zweckmäßiger Ausgestaltung der Erfindung kann der harte Partner aus gehärtetem oder beschichtetem Metall, aus einer Oxid- oder einer Nichtoxidkeramik bestehen.

Besonders bevorzugt wird eine Gleitpaarung, bei der der harte Partner aus monolithischem Siliziumcarbid und der weiche Partner aus CFC besteht.

Die genannten Lagerpaarungen gelten für Axial- wie Radiallager, wobei entweder das feststehende oder das rotierende Teil aus CFC besteht.

Das erfindungsgemäße Gleitlager zeigt bei Misch- und Trockenreibung ein sehr gutes tribologisches Verhalten, das durch einen niedrigen Reibbeiwert, geringen Verschleiß und eine geringe Wärmeentwicklung gekennzeichnet ist.

Der wesentliche Grund für das verbesserte tribologische Verhalten liegt in der faserspezifischen Oberflächenstruktur des CFC, die sich durch einen hohen Anteil an offenen Poren auszeichnet, in welchen sich stets eine ausreichende Schmiermittelmenge einlagert, die die Schmierung auch bei zeitweiliger Misch- und Trockenreibung aufrechterhält. Selbst im Fall einer reinen Trockenreibung steht für einen ausreichenden Zeitraum Kohlenstoff aus der Faser- und Matrixstruktur des Materials als Schmiermittel zur Verfügung. Auch das Vorhandensein von Feststoffen bis zu bestimmten Konzentrationen und Korngrößen wird von dem erfindungsgemäßen Gleitlager ohne Schaden verkraftet. Ursächlich hierfür ist die offenporige Oberflächenstruktur, die in der Lage ist, diese Art von Feststoffen schädigungsfrei in sich aufzunehmen.

In bezug auf die Korrosionsbeständigkeit ist CFC vergleichbar mit Kohlenstoff. Damit ist er in allen technisch relevanten Fluiden auch bei höheren Temperaturen universell einsetzbar.

Als weitere günstige Eigenschaften sprechen der niedrige Elastizitätsmodul und das schadenstolerante Bruchverhalten für den Werkstoff CFC. Vor allem ist dieser Werkstoff wesentlich unempfindlicher gegen Schlag, Thermoschock und mechanische Zugbeanspruchungen als monolithische Keramiken. Somit wird ebenfalls eine Verbundkonstruktion mit Metallteilen begünstigt.

## Patentansprüche

1. Fluidgeschmiertes Gleitlager, insbesondere in Kreiselpumpen einzusetzendes, durch die Förderflüssigkeit geschmiertes Gleitlager, wobei als Gleitpartner ein harter und ein weicher Werkstoff dienen, **dadurch gekennzeichnet**, daß der harte Partner aus Metall und der weiche Partner aus kohlefaserverstärktem Kohlenstoff (CFC) besteht.

2. Fluidgeschmiertes Gleitlager nach dem Gattungsbegriff des Anspruches 1, dadurch gekennzeichnet, daß der harte Partner aus Keramikmaterial und der weiche Partner aus CFC besteht.

3. Gleitlager nach Anspruch 1, dadurch gekennzeichnet, daß der harte Partner aus gehärtetem Metall besteht.

4. Gleitlager nach Anspruch 1, dadurch gekennzeichnet, daß der harte Partner aus beschichtetem Metall besteht.

5. Gleitlager nach Anspruch 2, dadurch gekennzeichnet, daß der harte Partner aus Oxidkeramik besteht.

6. Gleitlager nach Anspruch 2, dadurch gekennzeichnet, daß der harte Partner aus Nichtoxidkeramik besteht.

7. Gleitlager nach Anspruch 6, dadurch gekennzeichnet, daß der harte Partner aus monolitischem Siliziumcarbid besteht.

8. Gleitlager nach einem der Ansprüche 1 bis 7, dadurch gekennzeichnet, daß das feststehende Teil des Gleitlagers aus CFC besteht.

9. Gleitlager nach einem der Ansprüche 1 bis 7, dadurch gekennzeichnet, daß das rotierende Teil des Gleitlagers aus CFC besteht.
